# EUROPEAN PATENT APPLICATION

(11) **EP 1 282 266 A2**
(43) Date of publication of application: **05.02.2003**
(21) Application number: 02016218.6
(22) Date of filing: 18.07.2002
(51) Int. Cl.: H04L 12/26

(54) **Packet monitoring system**

(30) Priority: 31.07.2001 JP 2001231982
(71) Applicant: NEC CORPORATION, Tokyo (JP)
(72) Inventor: Oshizawa, Kazuo, Minato-ku, Tokyo (JP)
(74) Representative: Glawe, Delfs, Moll & Partner

(57) **Abstract**

A packet monitoring system includes nodes, a monitor node, and a network management system. The nodes are connected to the same network and assigned different addresses. The nodes switch packets in which destination addresses in the network are written, in accordance with the destination addresses. The monitor node is assigned a unique address different from the addresses of the nodes. The network management system issues a request for a packet to the nodes. The request from the network management system contains the unique address of the monitor node. Each of the nodes copies the packet before switching the packet, and transmits the copied packet to the monitor node in accordance with the unique address contained in the packet request from the network management system. The monitor node monitors the copied packet from each of the nodes.

## Description

### Background of the Invention

The present invention relates to a packet monitoring system for acquiring and monitoring packets.

In general, in a packet monitoring system having a plurality of nodes, it is essential to monitor packets as information for evaluating performance at each node or tracking down a potential problem. In a packet monitoring system, each node has a function of monitoring packets and acquires information (traffic information and the like) contained in packets monitored at each node.

In a conventional packet monitoring system, however, in order to monitor packets at each node, information contained in packets must be acquired at the position of each node, resulting in difficulty in acquiring information. Demands have therefore arisen for a packet monitoring system which can easily acquire packets.

In addition, in the conventional packet monitoring system, information about the whole network cannot be acquired in one place. This leads to inconvenience in viewing information. Demands have therefore arisen for a packet monitoring system which can acquire packets in one place.

As a conventional monitoring technique, "Switch for Random Monitoring in Exchange Communication Network" is disclosed in Japanese Patent Laid-Open No. 10-154989, in which an exchange communication network is monitored at random through a signal port of a network.

Japanese Patent Laid-Open No. 8-116334 discloses "Method and Device for Monitoring/Fault Analysis in Network Constituted of Plural LANs", in which all packets between terminals to be monitored, among packets transferred between a plurality of LANs, can be simultaneously monitored without using a plurality of LAN analyzers.

Japanese Patent Laid-Open No. 2-244847 discloses "Inter-Local Area Network Connecting Method", in which a monitoring unit is placed midway along a data cyclic sequence for each branch LAN, and data cycles through each branch LAN including the monitoring unit.

"Packet Multi-Address Transfer Method" is disclosed in Japanese Patent Laid-Open No. 6-303245, in which the same packet is not received by the same node plural times. "Packet Copying Device" is disclosed in Japanese Patent Laid-Open No. 10-41977, which has the function of copying one packet and sending it out to a plurality of designated paths and can copy a plurality of packets to send them in the same direction.

### Summary of the Invention

It is an object of the present invention to provide a packet monitoring system which can easily acquire packets.

It is another object of the present invention to provide a packet monitoring system which can acquire packets in one place.

It is still another object of the present invention to provide a packet monitoring system which can remotely monitor packets.

In order to achieve the above objects, according to the present invention, there is provided a packet monitoring system comprising a plurality of nodes which are connected to the same network and assigned different addresses, the plurality of nodes switching packets in which destination addresses in the network are written, in accordance with the destination addresses, a monitor node which is assigned a unique address different from the addresses of the plurality of nodes, and a requesting unit for issuing a request for a packet to the plurality of nodes, the request from the requesting unit containing the unique address of the monitor node, wherein each of the plurality of nodes copies the packet before switching the packet, and transmits the copied packet to the monitor node in accordance with the unique address contained in the packet request from the requesting unit, and the monitor node monitors the copied packet from each of the plurality of nodes.

### Brief Description of the Drawings

Fig. 1 is a block diagram showing a packet monitoring system according to an embodiment of the present invention;
Fig. 2 is a block diagram showing each node in Fig. 1;
Fig. 3 is a view showing the flows of packets input/output to/from a node; and
Fig. 4 is a view showing the flows of packets in the packet monitoring system.

### Description of the Preferred Embodiment

The present invention will be described in detail below with reference to the accompanying drawings.

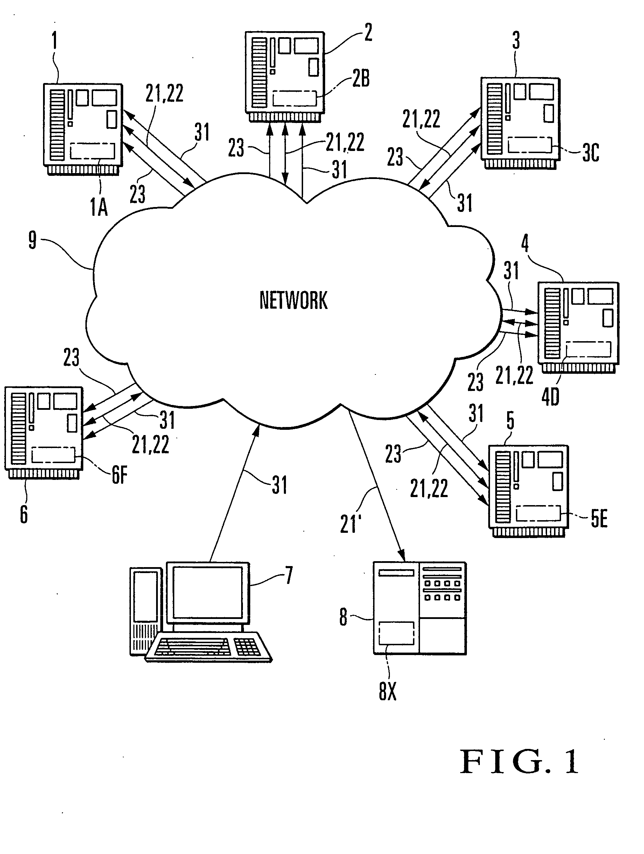

Fig. 1 shows a packet monitoring system according to an embodiment of the present invention. As shown in Fig. 1, the packet monitoring system according to this embodiment includes a plurality of nodes 1 to 6, a network management system (to be referred to as an NMS hereinafter) 7, and a monitor node 8. The plurality of nodes 1 to 6, NMS 7, and monitor node 8 are arranged in a network 9. The network 9 connects the nodes 1 to 6, NMS 7, and monitor node 8 to each other. In this embodiment, the number of nodes is six. However, the present invention is not limited to this.

The nodes 1 to 6 exchange packets 21, 22, and 23 in a general traffic in the network 9. The nodes 1 to 6 are assigned unique, different addresses 1A, 2B, 3C, 4D, 5E, and 6F, respectively, in the network 9. The nodes 1 to 6 switch the packets 21 and 22, of the plurality of packets, in which destination addresses (1A, 2B, 3C, 4D, 5E, and 6F) corresponding to addresses 1A, 2B, 3C, 4D, 5E, and 6F are written in accordance with the destination addresses (1A, 2B, 3C, 4D, 5E, and 6F).

Unlike the nodes 1 to 6, the monitor node 8 serves as a monitoring node for the nodes 1 to 6. The monitor node 8 is assigned unique address 8X different from addresses 1A, 2B, 3C, 4D, 5E, and 6F. The NMS 7 issues a request 31 for the packet 21 to the nodes 1 to 6. The request 31 is request information for instructing the nodes 1 to 6 to copy the packet 21 and transmit the copied packets to the monitor node 8. The request 31 contains unique address 8X.

On the basis of the request 31 from the NMS 7, the nodes 1 to 6 copy the packet 21 before switching it. The nodes 1 to 6 transmit copied packets 21' to the monitor node 8 in accordance with unique address 8X contained in the request 31.

The monitor node 8 accumulates the packets 21 (copied packets 21') from the respective monitor targets on the basis of source addresses 1A, 2B, 3C, 4D, 5E, and 6F of the nodes 1 to 6. Source addresses 1A, 2B, 3C, 4D, 5E, and 6F correspond to addresses 1A, 2B, 3C, 4D, 5E, and 6F assigned to the nodes 1 to 6, respectively. The monitor node 8 acquires and monitors the copied packets 21' from the nodes 1 to 6.

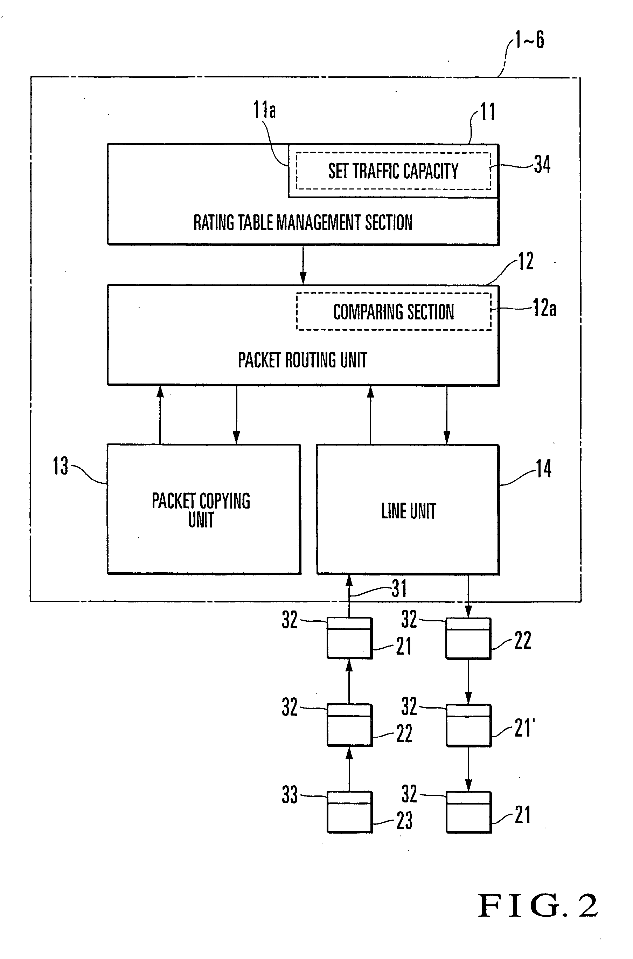

The arrangement of each of the nodes 1 to 6 will be described next with reference to Fig. 2.

As shown in Fig. 2, each of the nodes 1 to 6 includes a routing table management section 11 having a routing table 11a in which a traffic capacity 32 is stored in advance, a packet routing unit 12 connected to the routing table management section 11, a packet copying unit 13 connected to the packet routing unit 12, and a line unit 14 connected to the packet routing unit 12. The packet routing unit 12 includes a comparing section 12a for comparing traffic capacities. The packet routing unit 12 is connected to the routing table management section 11, packet copying unit 13, and line unit 14. The line unit 14 is connected to the network 9.

The line unit 14 performs interface processing between the respective nodes in the network 9. In interface processing, when, for example, the packets 21, 22, and 23 are to be transmitted/received from the node 1 to the node 2, the line unit 14 of the node 1 transmits/receives the packets 21, 22, and 23 to/from the line unit 14 of the node 2. The packets 21, 22, and 23 received by the line unit 14 are output to the packet routing unit 12.

The packets 21 and 22 contain traffic capacities 32. The packet 23 contains a traffic capacity 33. The routing table management section 11 has the routing table 11a for managing set traffic volumes used when the packet routing unit 12 routes the packets 21, 22, and 23, i.e., passes (switches) or blocks (discard) the packets. The routing table 11a stores, for example, set traffic capacities 34 (peak rates) for the respective traffics represented by CBR, Best Effort, and MCR. Consider a case wherein the traffic capacity 32 of each of the packets 21 and 22 exceeds the set traffic capacity 34, whereas the traffic capacity 33 of the packet 23 does not exceed the set traffic capacity 34.

The packets 21, 22, and 23 with the general traffic in the network 9 are routed by the packet routing unit 12. The comparing section 12a of the packet routing unit 12 compares the traffic capacities 32, 32, and 33 contained in the packets 21, 22, and 23 with the set traffic capacity 34 stored in the routing table 11a of the routing table management section 11. The packet routing unit 12 routes (passes or blocks) the packets 21, 22, and 23 on the basis of the comparison result.

If the comparison result indicates that the traffic capacity 32 of each of the packets 21 and 22 does not exceed a set traffic capacity 35, the packet routing unit 12 switches the packets 21 and 22 through the line unit 14 in accordance with the destination addresses (1A, 2B, 3C, 4D, 5E, and 6F). If the traffic capacity 33 of the packet 23 exceeds the set traffic capacity 35, the packet routing unit 12 discards the packet 23.

When the request 31 for the packet 21 is issued from the NMS 7, the packet routing unit 12 outputs the packet 21 and the request 31 as an instruction to copy the packet 21 to the packet copying unit 13 before switching the packet 21.

In accordance with the request 31, the packet copying unit 13 copies the packet 21, and writes unique address 8X contained in the request 31 in the copied packet 21'. The destination address (1A, 2B, 3C, 4D, 5E, and 6F) of the copied packet 21' is rewritten into unique address 8X by the packet copying unit 13. The packet routing unit 12 switches the packet 21 through the line unit 14 in accordance with the destination address (1A, 2B, 3C, 4D, 5E, and 6F). The packet routing unit 12 also transmits the copied packet 21' to the monitor node 8 through the line unit 14 in accordance with unique address 8X. This allows the monitor node 8 to monitor the packets 21 at all the nodes 1 to 6.

According to this embodiment, since the packets 21 can be remotely monitored at the monitor node 8 in the network 9, there is no need to acquire information (e.g., traffic information) contained in the packets 21 at the positions of the nodes 1 to 6 in the network 9. This makes it possible to easily acquire the packets 21 in one place and acquire traffic information and the like at once.

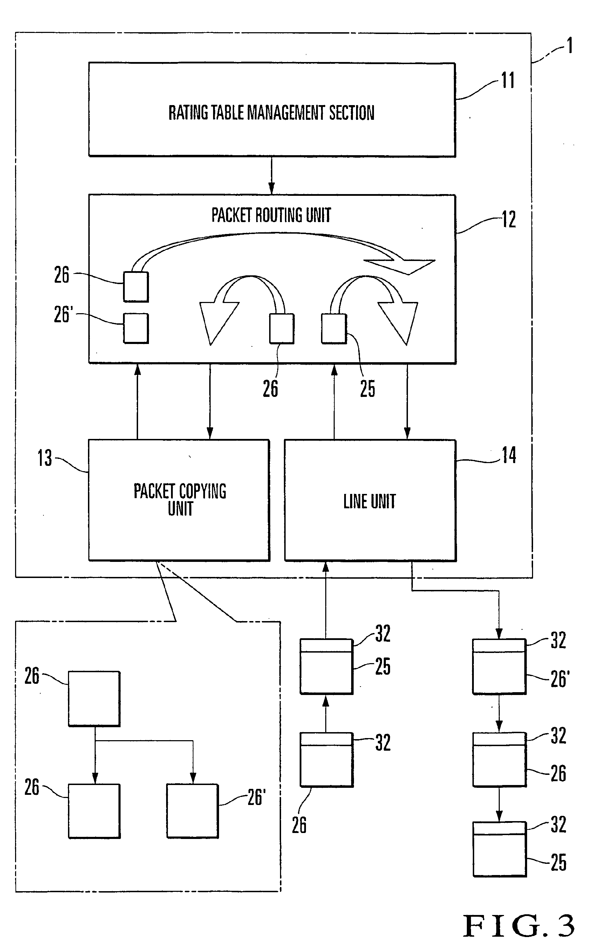

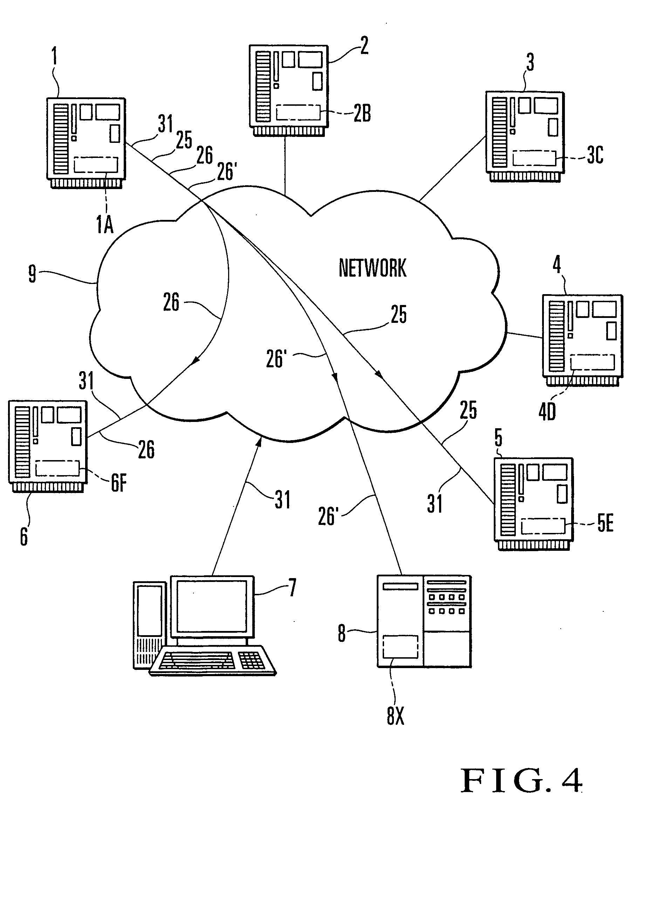

The operation of the above packet monitoring system will be described with reference to Figs. 3 and 4. Since the nodes 1 to 6 have the same arrangement, the node 1 will be described with reference to Figs. 3 and 4.

The node 1 switches a packet 26 corresponding to the above packet 21 to the node 6 in accordance with address 6F. The node 1 also switches a packet 25 corresponding to the above packet 22 to the node 5 in accordance with address 5E. Each of the packets 25 and 26 contains the above traffic capacity 32. Consider a case wherein the traffic capacity 32 of each of the packets 25 and 26 does not exceed the set traffic capacity 34 stored in the routing table 11a of the routing table management section 11.

If the need for monitoring the packet 26 with respect to the node 1 in the network 9 arises, the NMS 7 issues the request 31 for the packet 26 to the node 1, as shown in Fig. 4. As described above, the request 31 is request information which contains unique address 8X and instructs the node 1 to copy the packet 26 and transmit the copied packet to the monitor node 8. The packet 25 is a monitor non-target packet. The packet 26 is a monitor target packet. A packet 26' is a monitor target copied packet.

As shown in Fig. 3, the line unit 14 of the node 1 receives the monitor non-target packet 25 from one of the nodes 2, 3, 4, and 6, and outputs it to the packet routing unit 12. The line unit 14 also receives the monitor target packet 26 from one of the nodes 2, 3, 4, and 5, and outputs it to the packet routing unit 12.

The packet routing unit 12 (comparing section 12a) of the node 1 compares the traffic capacity 32 contained in the monitor non-target packet 25 with the set traffic capacity 35 stored in the routing table 11a of the routing table management section 11. If the comparison result indicates that the traffic capacity 32 contained in the monitor non-target packet 25 does not exceed the set traffic capacity 35, the packet routing unit 12 switches the monitor non-target packet 25 through the line unit 14 in accordance with address 5E. As shown in Fig. 4, the monitor non-target packet 25 is switched from the node 1 to the node 5.

In addition, the packet routing unit 12 (comparing section 12a) compares the traffic capacity 32 contained in the monitor target packet 26 with the set traffic capacity 35 stored in the routing table 11a of the routing table management section 11. If the request 31 for the packet 21 has been issued by the NMS 7, the traffic capacity 32 contained in the monitor target packet 26 does not exceed the set traffic capacity 34. For this reason, the packet routing unit 12 outputs the monitor target packet 26 and the request 31 as an instruction to copy the monitor target packet 26 to the packet copying unit 13.

In response to the request 31, the packet copying unit 13 of the node 1 copies the monitor target packet 26, and writes unique address 8X contained in the request 31 in the copied monitor target packet 26, i.e., the monitor target copied packet 26'. With this operation, address 6F of the monitor target copied packet 26' is rewritten into unique address 8X by the packet copying unit 13.

The packet routing unit 12 then switches the monitor target packet 26 through the line unit 14 in accordance with address 6F. The packet routing unit 12 also transmits the monitor target copied packet 26' to the monitor node 8 through the line unit 14 in accordance with unique address 8X. As shown in Fig. 4, with this operation, the monitor target packet 26 is switched from the node 1 to the node 6, and the monitor target copied packet 26' is transmitted from the node 1 to the monitor node 8.

According to this embodiment, since monitoring operation is performed at an arbitrary node (monitor node 8) in the network 9, there is no need to acquire information (e.g., traffic information) contained in the packet 21 at the position of each of the nodes 1 to 6 in the network 9. This makes it possible to easily acquire the packets 21.

In addition, by performing monitoring operation at an arbitrary node (monitor node 8) in the network 9, the packets 21 can be acquired in one place. This makes it possible to acquire traffic information and the like in the network 9 at once. Furthermore, by performing monitoring operation at an arbitrary node (monitor node 8) in the network 9, the packets 21 can be remotely monitored.

In the above embodiment, the line unit 14 outputs a received packet to the packet routing unit 12. However, the packet routing unit 12 may have both the functions of the packet routing unit 12 and line unit 14. In this case, the packet routing unit 12 receives the packets 21, 22, and 23, and compares the traffic capacities 32, 32, and 33 respectively contained in the received packets 21, 22, and 23 with the set traffic capacity 34 stored in the routing table of the routing table management section 11. The packet routing unit 12 routines the packets 21, 22, and 23, i.e., passes (switches the packets 21 and 22) and blocks (discard the packet 23) the packets, in accordance with the comparison result.

When the request 31 for the packet 21 is issued by the NMS 7, the packet routing unit 12 outputs the packet 21 and the request 31 as an instruction to copy the packet 21 to the packet copying unit 13 before switching the packet 21.

As has been described above, according to the present invention, packets can be easily acquired from a remote place.

## Claims

1. A packet monitoring system **characterized by** comprising:
a plurality of nodes (1 - 6) which are connected to the same network and assigned different addresses, said plurality of nodes switching packets in which destination addresses in the network are written, in accordance with the destination addresses;
a monitor node (8) which is assigned a unique address different from the addresses of said plurality of nodes; and
a requesting unit (7) for issuing a request for a packet to said plurality of nodes, the request from said requesting unit containing the unique address of said monitor node,
wherein each of said plurality of nodes copies the packet before switching the packet, and transmits the copied packet to said monitor node in accordance with the unique address contained in the packet request from said requesting unit, and
said monitor node monitors the copied packet from each of said plurality of nodes.

2. A system according to claim 1, wherein
each of said plurality of nodes comprises packet copying means (13), and
packet routing means (12) for, when a request for a packet is issued from said request unit, outputting the packet and a request as an instruction to copy the packet to said packet copying means before switching the packet,
said packet copying means copies the packet in response to the request from said packet routing means, and writes a unique address contained in the request in the copied packet, and
said packet routing means switches the packet in accordance with a destination address, and transmits the copied packet to said monitor node in accordance with the unique address.

3. A system according to claim 2, wherein said packet copying means rewrites the destination address of the copied packet into the unique address of said monitor node after copying the packet.

4. A system according to claim 2, wherein
the packet contains a traffic capacity, and
said packet routing means compares the traffic capacity contained in the packet with a set traffic capacity, and routines the packet on the basis of the comparison result.

5. A system according to claim 4, wherein said packet routing means switches the packet in accordance with the destination address if the traffic capacity in the packet does not exceed the set traffic capacity.

6. A system according to claim 4, wherein said packet routing means discards the packet if the traffic capacity of the packet exceeds the set traffic capacity.

7. A system according to claim 4, wherein
said system further comprises routing table management means (11) having a routing table (11a) in which the set traffic capacity is stored in advance, and
said packet routing means comprises comparing means (12a) for comparing the set traffic capacity stored in said routing table with the traffic capacity of the packet.
